# EUROPEAN PATENT APPLICATION

(11) **EP 0 826 723 A2**
(43) Date of publication of application: **04.03.1998**
(21) Application number: 97114934.9
(22) Date of filing: 28.08.1997
(51) Int. Cl.: C08J 9/32

(54) **Silicone rubber sponge composition and method for the manufacture of silicone rubber sponge**

(30) Priority: 29.08.1996 JP 247077/96
(71) Applicant: Dow Corning Toray Silicone Company, Limited, Tokyo 103 (JP)
(72) Inventor: Akitomo, Hiroyoshi, c/o Dow Corning Toray, Ichihara-shi, Chiba Prefecture (JP); Hamada, Mitsuo, c/o Dow Corning Toray, Ichihara-shi, Chiba Prefecture (JP); Imaizumi, Toru, c/o Dow Corning Toray, Ichihara-shi, Chiba Prefecture (JP); Ishida, Koichi, c/o Dow Corning Toray, Ichihara-shi, Chiba Prefecture (JP); Nozoe, Tugio, c/o Dow Corning Toray, Ichihara-shi, Chiba Prefecture (JP)
(74) Representative: Spott, Gottfried, Dr.

(57) **Abstract**

What is disclosed is a silicone rubber sponge composition which consists of a liquid silicone rubber composition cured at room temperature with gas generation, hollow particles of a thermoplastic silicone resin, and solvent which is in a liquid state at room temperature and has a solubility parameter of 6-10.

## Description

The present invention relates to a silicone rubber sponge composition and a method for the manufacture of a silicone rubber sponge.

Since silicone rubber sponges have excellent heat and weather resistance and low weight, they have found wide applications, primarily for automobile parts, which make the most of their characteristics. More specifically, they have found use as various sealing and packing materials, gaskets, O-rings, and the like. In the prior art, silicone rubber compositions curable by dehydrogenation condensation reaction and thermally curable silicone rubber compositions containing a thermally decomposable foaming agent, such as azobisisobutyronitrile, have been used to provide silicone rubber sponge compositions. However, the drawback of the silicone rubber sponge compositions containing a thermally decomposable foaming agent is the toxicity and odor of the gas generated in the decomposition. Furthermore, the problem associated with the silicone rubber compositions curable by dehydrogenation condensation reaction is that the silicone rubber sponge had large nonuniform cells, and a silicone rubber sponge with uniform and fine cells was very difficult to obtain. As disclosed in Unexamined Japanese Patent Application Heisei 5- 209080 and Japanese Patent Application Heisei 7-183553, a silicone rubber sponge having more uniform and finer cells can be obtained from a silicone rubber sponge composition containing glass spheres or hollow ceramics, or a silicone rubber sponge composition containing spheres with plastic shells enclosing a volatile substance, such as butane or isobutane. However, in order to prepare these silicone rubber sponges it is necessary to use a mechanical grinder generating a large shear force because of a high shell strength of the glass spheres or hollow ceramics. Not only the grinder itself was complex, but the cost of the process was high. Furthermore, the drawback of the method for the preparation of a silicone rubber sponge of a silicone rubber sponge composition containing spheres with plastic shells was that the thermal resistance of the plastic itself is lower than that of the silicone rubber, and the silicone rubber sponge molding changed color at a high temperature.

Thus, the object of the present invention is to provide a silicone rubber sponge composition which is cured at room temperature and produces a silicone rubber sponge having fine uniform cells after curing.

The inventors have conducted a study aimed at the resolution of these problems. The results of the study have shown that a silicone rubber composition having fine uniform cells can be obtained at room temperature with an inexpensive apparatus if hollow particles of a thermoplastic silicone resin and also a solvent dissolving the silicone resin shells of the hollow particles of a thermoplastic silicone resin are mixed with a liquid silicone rubber composition which can be cured at room temperature with gas generation. This finding laid the foundation for the present invention.

More specifically, the invention provides a silicone rubber sponge composition characterized by the fact that it consists of (A) 100 wt. parts of a liquid silicone rubber composition which is curable at room temperature with gas generation, (B) 0.01-50 wt. parts of hollow particles of a thermoplastic silicone resin, (C) 0.1-10 wt. parts a solvent which is in a liquid state at room temperature and has a solubility parameter (SP value) of 6-10.

No specific restriction is imposed on the type of the liquid silicone rubber composition that is curable at room temperature with gas generation, which is component (A) used in accordance with the present invention, provided that it is in a liquid state at room temperature and forms a silicone rubber sponge in curing while generating gas. Examples of such liquid silicone rubber compositions are a liquid silicone rubber composition that can be cured by condensation and addition reactions, this composition consisting of a diorganopolysiloxane containing alkenyl groups, which is in a liquid state at room temperature, a silanol-containing organosiloxane or organosilane containing silanol groups, an organohydrogenpolysiloxane, a platinum catalyst, and, if necessary, a reinforcing filler and forms a silicone rubber sponge during cure while generating gaseous hydrogen. A liquid silicone rubber composition that can be cured by addition reaction, which consists of a diorganopolysiloxane containing alkenyl groups, which is in a liquid state at room temperature, an organohydrogenpolysiloxane, water, a platinum catalyst, and, if necessary, a reinforcing filler and which forms a silicone rubber sponge during cure while generating gaseous hydrogen. A liquid silicone rubber composition curable by a condensation reaction, which consists of a diorganopolysiloxane containing silanol groups, which is in a liquid state at room temperature, an organohydrogenpolysiloxane, a catalyst enhancing the condensation reaction, such as a platinum catalyst, an organotin compound, and an organotitanium compound, and, if necessary, a reinforcing filler and which forms a silicone rubber sponge during cure while generating gaseous hydrogen. Among these compositions, the liquid silicone rubber composition that can be cured by condensation and addition reactions, is preferred since it has a high curing rate and excellent uniformity of curing.

An example of such a liquid silicone rubber composition that can be cured by condensation and addition reactions is a liquid silicone rubber composition consisting of: (a) a diorganopolysiloxane which is in a liquid state at room temperature and has on average at least two alkenyl groups in a molecule, (b) an silanol-containing organopolysiloxane having on average at least two hydrogen atoms bonded to a silicon atom in a molecule, (c) a polysiloxane or organosilane containing a silanol group (d) a platinum catalyst, and, if necessary, a reinforcing filler. This composition is described below. The diorganopolysiloxane of component (a) has on average at least two alkenyl groups bonded to a silicon atom in a molecule, (examples of alkenyl groups are a vinyl group, an allyl group, and a propenyl group.) Furthermore, examples of organic groups that can be present, other than the alkenyl group are an alkyl group, such as a methyl group, an ethyl group, and a propyl group, an aryl group, such as a phenyl group and a tolyl group, and a halogenated alkyl group, such as a 3,3,3-trifluoropropyl group and 3-chloropropyl group. The molecular structure of this component can be either a straight chain or a straight chain containing branches. No specific restriction is imposed on the molecular weight of this component, but it is preferred that its viscosity at 25°C be within a range from 100 cP to 10,000 cP. In accordance with the present invention, two or more such organopolysiloxanes can be used together.

The silanol-containing organopolysiloxane or organosilane containing a silanol group of component (b) is a foaming agent. Under the effect of a platinum catalyst of component (d), the dehydrogenation condensation reaction proceeds between the foaming agent and hydrogen atoms bonded to silicon atoms in organohydrogenpolysiloxane of component (c) and this reaction produces gaseous hydrogen. The organohydrogenpolysiloxane of component (c) contains at least two, preferably three or more, hydrogen atoms bonded to a silicon atom in a molecule. The addition reaction proceeding between the organohydrogenpolysiloxane and the alkenyl groups bonded to silicon atoms in component (a) under the effect of platinum catalyst of component (d) results in crosslinking and curing of the organohydrogenpolysiloxane. Examples of an organic group bonded to a silicon atom in component (c) are an alkyl group, such as a methyl group, an ethyl group, and a propyl group, an aryl group, such as a phenyl group and a tolyl group, and a halogenated alkyl group, such as a 3,3,3-trifluoropropyl group and a 3-chloropropyl group. This component may have a straight-chain, branched, ring-like, or net-like molecular structure. No specific restriction is imposed on the molecular weight of this component, but it is preferred that its viscosity at 25°C be 3-10,000 cP. The content of this component is such that the molar ratio of hydrogen atoms bonded to silicon atoms in this component and alkenyl groups bonded to silicon atoms in component (a) is (0.5 : 1)―(50 : 1). The selection of this range can be explained as follows. If this molar ratio is less than 0.5, good curability cannot be obtained. If it is greater than 50, the hardness of the silicone rubber sponge which is the cured product is too high. The platinum catalyst of component (d) is used to provide for curing of the composition by addition condensation reactions. Examples of suitable catalysts are a fine platinum powder, platinum black, chloroplatinic acid, olefin complexes of chloroplatinic acid, complexes of chloroplatinic acid and alkenyl siloxane, rhodium compounds, and palladium compounds. Various fillers may be mixed with this liquid silicone rubber composition to adjust its flowability and to increase mechanical strength of the cured product. Examples of such fillers are reinforcing fillers, such as precipitated silica, fumed silica, precipitated or fumed silica subjected to hydrophobization with an organosilicon compound, such as dimethyldichlorosilane, hexamethyldisilazane, and octamethylcyclotetrasiloxane, fired silica, fumed titanium dioxide, and carbon black.

The hollow particles of thermoplastic silicone resin of component (B) used in accordance with the present invention are an essential component. Gas contained in the hollow particles acts as a foaming additive which enhances foaming and makes the cells uniform. The hollow particles of thermoplastic silicone resin can be manufactured, for example, by spraying an aqueous dispersion, that contains water and a silicone resin dissolved in a solvent, from a spray nozzle in a hot gas flow to prepare hollow particles of silicone resin, and then separating these hollow particles of silicone resin from silicone resin grains that were formed at the same time as they were. Air, nitrogen gas, and helium gas are examples of gas inside the hollow particles of silicone resin. An organopolysiloxane with an average unit formula RaSiO_{(4-a)/2} (where R is a methyl group, a phenyl group, a 3,3,3-trifluoropropyl group, etc., a = 0.8-1.8) is an example of the silicone resin constituting the hollow particles. The softening temperature of this resin is preferably 40-200°C, still more preferably 60-180°C. No specific restriction is imposed on the particle size of component (B), but it is preferred that the average particle size be within a range from 0.1 to 500 µm. It is even more preferred that this range be 5-50 µm. The content of component (B) is 0.01-50 wt. parts, preferably 0.1-40 wt. parts, per 100 wt. parts of the liquid silicone rubber composition which generates gas during curing at room temperature (component (A)).

A solvent which is in a liquid state at room temperature and has a solubility parameter (SP value) of 6-10 and which is component (C) used in accordance with the present invention is employed to dissolve the silicone resin shells of component (B) and release gas enclosed therein. Examples of such a solvent are benzene, toluene, xylene, cyclohexane, bromobenzene, benzyl alcohol, hexane, dichloromethane, isooctane, tetrahydrofuran, acetone, diethyl ether, and dioxane. The SP value range of 6-10 is selected because outside this range the hollow particles of thermoplastic silicone resin are difficult to dissolve. The content of component (C) is 0.1-10 wt. parts, preferably 0.5-7 wt. parts, per 100 wt. parts of the liquid silicone rubber composition generating gas in during curing of component (A). The preferred component (C) is a solvent that can readily dissolve thermoplastic silicone resins.

Non-reinforcing fillers, such as ground quartz, diatomite, aluminosilicic acid, alumina, zinc oxide, magnesium oxide, and calcium carbonate, and, if necessary, a pigment, an addition reaction inhibitor, a heat stabilizer, a fireproofing agent, a plasticizer, and an antisticking additive can be added to the liquid silicone rubber composition in accordance with the present invention. The liquid silicone rubber sponge composition in accordance with the present invention can be readily manufactured by uniformly mixing component (A), component (B), and, if necessary, various additives. Furthermore, it is preferred that the specific gravity of the resulting silicone sponge be 0.1-0.9. In order to prevent the dissolution of the hollow particles of silicone resin of component (B) by the solvent of component (C) in storage, it is preferred that mixing of components (B) and (C) be conducted immediately before the manufacture of silicone rubber sponge. If the components (A), (B), and (C) are mixed at room temperature, the silicone resin shells of component (B) are dissolved under the effect of component (C), the gas enclosed therein is released in component (A) which is cured with gas generation, and a silicone rubber sponge is obtained which has fine uniform cells.

Since the silicone rubber sponge obtained as described above has fine uniform cells it is suitable for sealing materials, packing, gaskets, O-rings, insulation, and the like.

The present invention will be explained below with reference to practical examples of its implementation.. The term "parts" in the examples stands for weight parts; viscosity is represented by a value at a temperature of 25°C.

### Reference Example 1

A methyl phenyl polysiloxane resin consisting of methyl siloxane units and methyl phenyl siloxane units with a molar ratio thereof of 22 : 78, that is, a silicone resin (softening temperature 80°C, specific gravity 1.20), was dissolved in dichloromethane, and the resulting dichloromethane solution (concentration of solids 30 wt.%) was supplied at a feed rate of 100 cc/min together with pure water (feed rate 25 cc/min) into a static mixer to prepare a dispersion. The dispersion was continuously sprayed in a spray drier using a two-flow nozzle and gaseous nitrogen as a hot gas flow. The temperature of the hot gas flow of gaseous nitrogen in this process was 70°C and the pressure was 0.5 kg/cm². The collected particles of silicone resin were immersed for 24 hours into an aqueous solution consisting of 100 parts of pure water and 1 part of nonionic surfactant (trimethylnonanol adduct with ethylene oxide), and the floating hollow particles of the silicone resin were collected. The collected hollow particles of silicone resin had an average diameter of 40 µm and an average shell thickness of 4 µm. The hollow particles contained gaseous nitrogen.

### Practical Example 1

In this Practical Example, 100 parts of dimethylpolysiloxane (content of vinyl groups 0.14 wt.%) terminated on both ends of molecular chain with dimethylvinylsiloxy groups and having a viscosity of 1000 cP and 5.0 parts of dimethylpolysiloxane terminated on both ends of molecular chain with silanol groups, having a viscosity of 50 cP, and containing 7 parts of fumed silica with a specific surface area of 200 m²/g that was treated with hexamethylsilazane, were placed into a mixer and mixed to obtain a homogeneous liquid silicone rubber base. Then, 0.4 part of a complex of chloroplatinic acid and divinyltetramethyldisiloxane (platinum content 0.4 wt.%) and 5.0 parts of hollow particles of methyl phenyl polysiloxane resin with an average particle diameter of 40 µm and an average shell thickness of 4.0 µm that were obtained in Reference Example 1 were homogeneously mixed, and the mixture was placed into a cartridge as liquid A. Furthermore, separately, 10 parts of methyl hydrogen polysiloxane (content of hydrogen atoms bonded to silicon atoms 1.5 wt.%) terminated on both ends with trimethylsiloxy groups and having a viscosity of 20 cP, 2.0 parts of 3,5-dimethyl-1-hexyne-3-ol as a curing inhibitor, and 5.0 parts of benzyl alcohol as a solvent were homogeneously mixed with 100 parts of this liquid silicone rubber base, and the mixture was placed into a cartridge as liquid B. Liquids A and B were supplied at a ratio of 1 : 1 to a 12-element static mixer, homogeneously mixed and extruded to give 3-mm beads. The beads were cured by heating for 1 h at room temperature to give a silicone rubber sponge. The foaming ratio, specific gravity, and uniformity of cells of this silicone rubber sponge were measured. The results are presented in Table 1. For comparison, the foaming ratio, specific gravity, and uniformity of cells (diameter of foam cells) were also measured for a liquid silicone rubber composition that was identical to the above-described composition with the exception that it contained no benzyl alcohol as a solvent. The results obtained are shown in Table 1. This table clearly shows that the silicone rubber sponge in accordance with the present invention has fine uniform cells.

**Table 1**

| Item | Practical Example 1 | Comparative Example 1 |
|---|---|---|
| Specific gravity | 0.35 | 0.35 |
| Foaming ratio | 2.8 | 2.8 |
| Foam cell diameter (mm) | 0.3-0.6 | 1.2-2.0 |

### Practical Example 2

In this Practical Example, 5.0 parts of hollow particles of methyl phenyl polysiloxane resin with an average particle size of 40 µm and a softening temperature of 80°C that were obtained in Reference Example 1 and 0.4 part of a complex of chloroplatinic acid and divinyltetramethyl-disiloxane (platinum content 0.4 wt.%) were separately homogeneously mixed with 100 parts of lithium silicone rubber base of the same composition as the liquid silicone rubber base of Practical Example 1. The mixture was placed in a cartridge as liquid A. Furthermore, a cartridge was also filled with liquid C prepared by removing only the hollow particles of methyl phenyl polysiloxane resin from the above-described composition. Furthermore, separately, 10 parts of methyl hydrogen polysiloxane (content of hydrogen atoms bonded to silicon atoms 1.5 wt.%) terminated on both ends with trimethylsiloxy groups and having a viscosity of 20 cP, 2.0 parts of 3,5-dimethyl-1-hexyne-3-ol as a curing inhibitor, and 3.0 parts of toluene as a solvent were homogeneously mixed with 100 parts of the above-described liquid silicone rubber base, and the mixture was placed into a cartridge as liquid B. Liquids A and B were supplied at a ratio of 1 : 1 to a 12-element static mixer, homogeneously mixed and extruded to give 3-mm beads. The beads were cured by heating for 1 h at room temperature to give a silicone rubber sponge. The foaming ratio, specific gravity, and uniformity of cells of this silicone rubber sponge were measured. The results are presented in Table 2. For comparison, similar measurements were also conducted for a liquid silicone rubber sponge obtained by supplying liquids C and B to the above-described static mixer, homogeneously mixing, extruding as described above, and curing at room temperature. The results obtained are shown in Table 2. This table clearly shows that the silicone rubber sponge in accordance with the present invention has fine uniform cells. The silicone rubber sponge in accordance with the present invention had fine uniform cells similarly to the silicone rubber sponge of Practical Example 1.

**Table 2**

| Item | Practical Example 5 | Comparative Example 1 |
|---|---|---|
| Specific gravity | 0.35 | 0.37 |
| Foaming ratio | 2.8 | 2.8 |
| Foam cell diameter (mm) | 0.2-0.5 | 1.1-2.0 |

The silicone rubber sponge composition in accordance with the present invention consists of a liquid silicone rubber composition, which is cured at room temperature with gas generation, hollow particles of a thermoplastic silicone resin, and a solvent dissolving the silicone resin shells of these hollow particles. As a result, a silicone rubber sponge obtained by curing at room temperature has fine uniform cells. With the method for the manufacture of a silicone rubber sponge in accordance with the present invention, no heating is required for curing and a silicone rubber sponge can easily be obtained which has fine uniform cells after curing.

## Claims

1. A silicone rubber sponge composition comprising::
(A) 100 wt. parts of a liquid silicone rubber composition which is curable at room temperature with the generation of gas;
(B) 0.01-50 wt. parts per 100 parts of (A) of thermoplastic silicone resin hollow particles;
and
(C) 0.1-10 wt. parts per 100 parts of (A) of a solvent which is in a liquid state at room temperature and has a solubility parameter of 6-10.

2. The silicone rubber sponge composition as claimed in Claim 1, wherein said gas is a hydrogen produced by a condensation reaction.

3. The silicone rubber sponge composition as claimed in Claim 2, wherein the liquid silicone rubber composition, component (A) mainly consists of:
(a) a diorganopolysiloxane which is in a liquid state at room temperature and has on average at least two alkenyl groups per molecule;
(b) an organopolysiloxane having at least two hydrogen atoms bonded to a silicon atom per molecule;
(c) a silanol-containing organopolysiloxane or organosilane containing silanol; and
(d) a platinum catalyst.

4. The silicone rubber sponge composition as claimed in Claim 1, wherein the hollow particles, component (B) have a softening temperature of 40°C-200°C and which enclose a gas.

5. A method for the manufacture of a silicone rubber sponge , wherein the components (A), (B), and (C) as claimed in Claim 1 are cured at room temperature.
